# EUROPÄISCHE PATENTSCHRIFT

(11) **EP 1 698 952 B1**
(45) Veröffentlichungstag und Bekanntmachung des Hinweises auf die Patenterteilung: **23.04.2008**
(21) Anmeldenummer: 06002219.1
(22) Anmeldetag: 03.02.2006
(51) Int. Cl.: G05B 19/042, G05B 23/02, F02D 41/24

(54) **Verfahren und Vorrichtung zum Sichern individueller Einstellungsdaten**
Method and apparatus for inidvidual configuration parameter backup
Procédé et dispositif destinés à la sécurisation de données de réglage individuelles

(30) Priorität: 03.03.2005 DE 102005009639
(43) Veröffentlichungstag der Anmeldung: 06.09.2006
(73) Patentinhaber: Bayerische Motoren Werke Aktiengesellschaft, 80809 München (DE)
(72) Erfinder: Müller, Stefan, 85540 Haar-Gronsdorf (DE); Siefermann, Otmar, 82194 Gröbenzell (DE); Königseder, Thomas, 85457 Wilfling/Wörth (DE); Göhmann, Markus, 82418 Murnau (DE)

(56) Entgegenhaltungen:
- DE-A1- 3 932 263
- US-B1- 6 546 321

## Beschreibung

Die Erfindung bezieht sich auf ein Verfahren zum Sichern benutzer- und/oder fahrzeugindividueller Einstellungsdaten eines Kraftfahrzeugs, welche in einem auszutauschenden oder neu zu programmierenden Quellsteuergerät gespeichert sind.

Die Erfindung bezieht sich weiter auf ein Kraftfahrzeug-Steuergerät zur Durchführung eines solchen Verfahrens.

Die Erfindung bezieht sich ferner auf eine Diagnose- und Konfigurationseinrichtung zur Durchführung eines solchen Verfahrens.

Moderne Kraftfahrzeuge weisen eine Vielzahl von Steuergeräten auf, welche zur Steuerung bzw. Regelung verschiedener Fahrzeugfunktionen geeignet sind. Viele dieser Fahrzeugfunktionen werden abhängig von benutzer- und/oder fahrzeugindividuellen Einstellungsdaten gesteuert bzw. geregelt.

Bei solchen Einstellungsdaten kann es sich beispielsweise um Nutzereinstellungen (z. B. abgespeicherte und/oder voreingestellte Rufnummern für eine Telekommunikationseinrichtung, abgespeicherte und/oder voreingestellte Adressen für eine Navigationseinrichtung, Bluetooth-Kopplungsdaten etc.) und/oder Fahrzeugeinstellungswerte (z. B. Werte zur Adaption von Getriebeschaltzeitpunkten, DME-Adaptionswerte etc.) und/oder Berechtigungswerte (z. B. Freischaltcodes) handeln.

Beim Austausch eines Steuergeräts, in welchem fahrzeug- und/oder benutzerindividuelle Einstellungsdaten gespeichert sind, oder bei einem Softwareersatz durch Neuprogrammierung bzw. Neucodierung eines solchen Steuergeräts gehen die Einstellungsdaten gemäß dem Stand der Technik häufig verloren. Im Fall einer Neuprogrammierung werden die, typischerweise teilweise oder vollständig flüchtig gespeicherten, Einstellungsdaten mit neuen Daten überschrieben. Im Fall eines Austauschs werden die Einstellungsdaten nicht in ein neues Steuergerät übernommen.

Alternativ zu einem vollständigen Datenverlust besteht gemäß dem Stand der Technik, die Möglichkeit einer sehr aufwändigen manuellen Übernahme von Einstellungsdaten in ein neues Steuergerät oder in eine neue Software-Version desselben Steuergeräts. Die Einstellungsdaten werden hierzu durch eine Diagnoseeinrichtung aus einem Steuergerät, in welchem sie gespeichert sind, ausgelesen und durch eine Anzeigevorrichtung zur Anzeige gebracht. Anschließend werden die zur Anzeige gebrachten Einstellungen von einem Service-Fachmann von der Anzeigevorrichtung abgelesen und manuell in ein neues Steuergerät oder in eine neue Software-Version desselben Steuergeräts einprogrammiert.

Ein solches Verfahren gemäß dem Stand der Technik weist verschiedene Nachteile für den Benutzer und/oder den Service-Fachmann auf. Die manuelle Übertragung ist zum einen mit großer Mühe und hohem Zeitaufwand verbunden. Zum anderen ist ein solches Vorgehen insofern nicht prozesssicher, als Einstellungsdaten fehlerhaft oder unvollständig übertragen werden können. Die fehlerhafte oder unvollständige Übertragung der Einstellungsdaten kann ein verändertes, unter Umständen sogar sicherheitskritisches, Verhalten des Fahrzeuges nach dem Austausch bzw. der Neuprogrammierung eines Steuergeräts zur Folge haben.

Einige Einstellungsdaten (z.B. Freischaltcodes) können bzw. sollten zudem aus Datenschutzgründen nicht unverschlüsselt in Gegenwart Dritter, etwa des Service-Fachmanns oder anderer Personen im Umfeld der hierzu verwendeten Anzeigeeinrichtung, zur Anzeige gebracht werden. Eine spätere Nachbeschaffung solcher Freischaltcodes ist in der Regel entweder mit hohem Aufwand verbunden oder vollständig ausgeschlossen.

Schließlich sind bestimmte Einstellungen durch Verfahren gemäß dem Stand der Technik nicht auslesbar und/oder programmierbar und lassen sich somit nicht in einem neuen Steuergerät oder in einer neuen Software-Version desselben Steuergeräts wiederherstellen.

Patentschrift US 6 546 321 offenbart ein Verfahren zum Sichern benutzer- und/oder fahrzeugindividueller Einstelldaten eines Kraftfahrzeugs, welche in einem auszutauschenden oder neu zu programmierenden Quellsteuergerät gespeichert sind, bei welchem das Quellsteuergerät über ein Kommunikationssystem mit einer Diagnose- und Konfigurationseinrichtung verbunden wird.

Bei dem Verfahren gemäß US 6 546 321 besteht der Nachteil, dass alle in dem Quellsteuergerät gespeicherten individuellen Einstellungsdaten ausgelesen werden müssen. Es besteht keine Möglichkeit, gezielt Einstellungsdaten einer bestimmten Kategorie auszulesen. Dadurch muss unter anderem stets eine verhältnismäßig große Datenmenge vom Quellsteuergerät zur Diagnose- und Konfigurationseinrichtung übertragen werden, was insbesondere zu einer langen Gesamtübertragungsdauer führen kann. Außerdem liegen die gewünschten Einstellungsdaten auch nach der Übertragung nicht separat von den übrigen übertragenen Einstellungsdaten vor.

Eine Aufgabe der vorliegenden Erfindung ist es, ein einfaches Verfahren zu schaffen, um benutzer- und/oder fahrzeugindividuelle Einstellungsdaten eines Kraftfahrzeugs, welche in einem Quellsteuergerät gespeichert sind, bei dessen Austausch oder Neuprogrammierung effizient zu sichern.

Gelöst wird die Aufgabe erfindungsgemäß durch ein Verfahren gemäß Anspruch 1.

Durch die Angabe der Quellspeicherorte zeigt das Quellsteuergerät der Diagnose- und Konfigurationseinrichtung zunächst an, wo und ggf. welche sicherungsrelevanten Datensätze in dem Quellsteuergerät abgelegt sind. Zu diesem Zweck ist lediglich eine sehr geringe Datenmenge an die Diagnose- und Konfigurationseinrichtung zu übertragen, wodurch diese Angaben nach kurzer Zeit bei der Diagnose- und Konfigurationseinrichtung vorliegen.

Die Angabe des Quellspeicherorts kann beispielsweise lediglich in einem Zeiger auf den Beginn eines sicherungsrelevanten Datensatzes in einer Speichereinheit des Quellsteuergeräts oder in der Angabe eines Speicherbereichs bestehen.

Die Angabe des Speicherorts wird zudem um weitere Angaben zu dem am jeweiligen Speicherort befindlichen Datensatz erweitert Hierbei kann es sich beispielsweise um Angaben zur Datenmenge und/oder zur Art und/oder zur Herkunft und/oder zum letzten Veränderungszeitpunkt und/oder zu einer Priorität des Datensatzes bzw. der durch den Datensatz beschriebenen Einstellungen handeln.

Gemäß der vorliegenden Erfindung wird von der Diagnose- und Konfigurationseinrichtung anhand der weiteren Angaben eine Auswahl zu sichernder Datensätze getroffen und/oder es wird eine Reihenfolge festgelegt, in welcher mehrere zu sichernde Datensätze gesichert werden.

Anschließend werden die zu sichernden Datensätze durch die Diagnose- und Konfigurationseinrichtung von den jeweiligen Speicherorten des Quellsteuergeräts gelesen bzw. von dort auf eine entsprechende Anforderung der Diagnose- und Konfigurationseinrichtung an die Diagnose- und Konfigurationseinrichtung übertragen und in dieser zwischengespeichert.

Gemäß einer Ausführungsform der vorliegenden Erfindung werden sämtliche Datensätze, deren Quellspeicherort übertragen wurde, durch die Diagnose- und Konfigurationseinrichtung von dem Quellspeicherort ausgelesen und in der Diagnose- und Konfigurationseinrichtung zwischengespeichert.

Ein erfindungsgemäßes Verfahren erlaubt eine zuverlässige und vollständige Sicherung der in einem Steuergerät abgelegten sicherungsrelevanten benutzer- und/oder fahrzeugindividuellen Einstellungsdaten.

Ein erfindungsgemäßes Verfahren bietet den Vorteil, dass gegenüber einem Austausch oder einer Neuprogrammierung eines Steuergeräts ohne Datensicherung nicht die Notwendigkeit einer zusätzlichen Bedienaktion besteht. Unter bestimmten Umständen, welche in der weiteren Beschreibung der Erfindung exemplarisch angegeben werden, kann das feste oder optionale Vorsehen einer solchen Bedienaktion jedoch vorteilhaft sein.

Weiter bietet ein erfindungsgemäßes Verfahren den Vorteil, dass durch die Beschränkung des Auslesens bzw. der Datenübertragung auf sicherungsrelevante Datensätze die übertragene Datenmenge und somit auch die zur Übertragung der Daten benötigte Zeit minimiert werden kann.

Gemäß einer weiter oben bereits angesprochenen Weiterbildung der vorliegenden Erfindung kann die Datenmenge weiter reduziert werden, indem seitens der Diagnose- und Konfigurationseinrichtung eine Auswahl zu sichernder Einstellungsdaten anhand weiterer Angaben vorgenommen wird. Die bei einer solchen Auswahl angewendeten Kriterien können fest in der Diagnose- und Konfigurationseinrichtung abgelegt und/oder in diese eingebbar sein. Die angewendeten Kriterien können von der Art oder einer Klasse des Quellsteuergeräts abhängig sein. Eine Eingabe von Kriterien und/oder eine direkte Auswahl zu sichernder Datensätze kann vor oder während eines erfindungsgemäßen Verfahrens erfolgen.

Insbesondere kann eine solche Eingabe durch einen Service-Fachmann und/oder einen Benutzer erfolgen, nachdem Speicherorte und ggf. weitere Angaben zu den Einstellungsdaten zur Diagnose- und Konfigurationseinrichtung übertragen und von dieser zur Anzeige gebracht worden sind. Zu beachten ist jedoch, dass eine solche Eingabe in diesem Schritt eines erfindungsgemäßen Verfahrens eine zusätzliche Bedienaktion gegenüber einem Austausch oder einer Neuprogrammierung des Quellsteuergeräts ohne Datensicherung bedeutet. Eine solche Eingabe in diesem Schritt eines erfindungsgemäßen Verfahrens ist daher lediglich optional vorzusehen.

Nach der Zwischenspeicherung aller zu sichernden Datensätze in der Diagnose- und Konfigurationseinrichtung kann ohne die Gefahr eines Datenverlusts ein Austausch oder eine Neuprogrammierung des Quellsteuergeräts vorgenommen werden. Die gesicherten Daten sind nach dem Austausch oder der Neuprogrammierung zur Individualisierung eines Zielsteuergeräts verwendbar.

Bestand der Grund für die Datensicherung in einer Neuprogrammierung des Quellsteuergeräts, dient das Quellsteuergerät bevorzugt auch als Zielsteuergerät.

Bestand der Grund für die Datensicherung hingegen in einem Austausch des Quellsteuergeräts gegen ein Ersatzsteuergerät, so dient bevorzugt das Ersatzsteuergerät als Zielsteuergerät.

Nach dem Austausch bzw. der Neuprogrammierung des Quellsteuergeräts werden die in der Diagnose- und Konfigurationseinrichtung zwischengespeicherten Datensätze von der Diagnose- und Konfigurationseinrichtung an das Zielsteuergerät übertragen und an einem geeigneten Zielspeicherort in dem Zielsteuergerät gespeichert.

Bevorzugt entspricht der Zielspeicherort in dem Zielsteuergerät dem Quellspeicherort in dem Quellsteuergerät hinsichtlich der Verwertung eines dort gespeicherten Datensatzes im jeweiligen Steuergerät.

Im Fall einer Neuprogrammierung des Quellsteuergeräts ist der Zielspeicherort bevorzugt gleich dem Quellspeicherort.

Im Fall einer Neuprogrammierung des Quellsteuergeräts dient die Diagnose- und Konfigurationseinrichtung bevorzugt neben der Sicherung benutzer- und/oder fahrzeugindividueller Einstellungsdaten ebenfalls zur, hier ansonsten nicht näher beschriebenen, Neuprogrammierung des Quellsteuergeräts. Bevorzugt steuert die Diagnose- und Konfigurationseinrichtung die Folge von Vorgängen
- Sicherung von benutzer- und/oder fahrzeugindividuellen Einstellungsdaten
- Neuprogrammierung des Quellsteuergeräts
- Rückübertragung und -speicherung der zwischengespeicherten Einstellungsdaten ins Quellsteuergerät
und bleibt während der gesamten Folge von Vorgängen über das Kommunikationssystem mit dem Quellsteuergerät verbunden.

Bevorzugt erfolgt der Ablauf der Folge von Vorgängen nach deren Start ohne die Notwendigkeit einer Bedienaktion oder eines Nutzereingriffs, indem die Diagnose- und Konfigurationseinrichtung nach der Beendigung eines Vorganges selbsttätig den nächsten Vorgang startet.

Bevorzugt ist ein solcher Ablauf entweder durch eine Eingabeaktion an der Diagnose- und Konfigurationseinrichtung oder durch die Feststellung einer Verbindung der Diagnose- und Konfigurationseinrichtung mit mindestens einem Quellsteuergerät auslösbar.

Alternativ zur oben genannten bevorzugten Variante der Erfindung.kann die Verbindung zwischen Diagnose- und Konfigurationseinrichtung und Quellsteuergerät während der genannten Folge von Vorgängen optional auch zwischenzeitlich getrennt und später wieder hergestellt werden. Dies kann in sicherer Art und Weise über ein sitzungsbasiertes Konzept bewerkstelligt werden. Eine Sitzung (session) wird dabei durch die Trennung lediglich unterbrochen (suspend) und später wieder aufgenommen (resume).

Ebenso in Abweichung zur oben genannten bevorzugten Variante der Erfindung ist während der genannten Folge von Vorgängen eine Interaktion zwischen der Diagnose- und Konfigurationseinrichtung und einem Benutzer denkbar. Eine solche Interaktion kann besipielsweise der Auswahl zu sichernder Datensätze dienen.

Im Fall eines Austauschs des Quellsteuergeräts gegen ein Zielsteuergerät wird das Zielsteuergerät nach dem Austausch bevorzugt über das Kommunikationssystem anstelle des Quellsteuergeräts mit der Diagnose- und Konfigurationseinrichtung verbunden.

Gemäß einer vorteilhaften Weiterbildung der vorliegenden Erfindung wird im Fall eines Austauschs des Quellsteuergeräts gegen ein Zielsteuergerät zumindest ein sicherungsrelevanter Datensatz nach erfolgreich abgeschlossener Zwischenspeicherung in der Diagnose- und Konfigurationseinrichtung aus dem Quellsteuergerät gelöscht oder durch einen Standard-Datensatz überschrieben.

Das ausgetauschte Steuergerät ist somit nicht mehr mit den entsprechenden benutzer- und/oder fahrzeugindividuellen Einstellungen versehen und kann unter Umständen in einem anderen Kraftfahrzeug eingesetzt werden. Zudem sind die entsprechenden benutzer- und/oder fahrzeugindividuellen Einstellungen auch bei unklarem Verbleib des ausgetauschten Quellsteuergeräts vor unbefugtem Zugriff geschützt.

Außerdem werden gemäß einer hiervon unabhängigen vorteilhaften Weiterbildung der vorliegenden Erfindung sämtliche zwischengespeicherten Datensätze nach erfolgreich abgeschlossener Speicherung im Zielsteuergerät aus der Diagnose- und Konfigurationseinrichtung gelöscht.

Eine solche Maßnahme hat neben einer Verringerung der vorzuhaltenden Daten ebenfalls den Zweck, einen unbefugten Zugriff auf die Einstellungsdaten zu verhindern.

Die bisherigen Ausführungen beziehen sich auf die Anwendung eines erfindungsgemäßen Verfahrens zur Sicherung benutzer- und/oder fahrzeugindividueller Einstellungsdaten aus einem einzigen Quellsteuergerät. Der erfinderische Gedanke umfasst jedoch ebenfalls die Anwendung zur Sicherung benutzer- und/oder fahrzeugindividueller Einstellungsdaten aus mehreren oder sämtlichen Steuergeräten eines Kraftfahrzeugs sowie gegebenenfalls die jeweilige Rückübertragung an ein Zielsteuergerät und die dortige Speicherung.

Bei der Anwendung eines erfindungsgemäßen Verfahrens auf mehrere oder sämtliche Steuergeräte eines Kraftfahrzeugs kann der Anlass der Datensicherung entweder ausschließlich im Austausch von Quellsteuergeräten gegen entsprechende Ersatzsteuergeräte oder ausschließlich in der Neuprogrammierung von Quellsteuergeräten oder in einer Kombination beider Varianten liegen.

Insbesondere in dem Fall, dass ein erfindungsgemäßes Verfahren zur Sicherung benutzer- und/oder fahrzeugindividueller Einstellungsdaten aus mehreren Quellsteuergeräten und zur Rückübertragung der Einstellungsdaten nach der Neuprogrammierung angewendet wird und dass der Anlass der Datensicherung ausschließlich in der Neuprogrammierung von Quellsteuergeräten besteht, ist ein Ablauf der Datensicherung und Rückübertragung für alle Steuergeräte ohne Bedienaktion realisierbar. Dabei werden bevorzugt zu Beginn einer entsprechenden Abfolge von Vorgängen die Einstellungsdaten aller Quellsteuergeräte gesichert. Alternativ können die Einstellungsdaten der einzelnen Quellsteuergeräte einzeln gesichert werden und die Datensicherung eines zweiten Quellsteuergeräts beginnt erst, wenn die Einstellungsdaten eines ersten Quellsteuergeräts an dieses rückübertragen sind.

Der Speicheraufbau eines an einem erfindungsgemäßen Verfahren beteiligten Steuergeräts ist erfindungsgemäß so organisiert, dass sich entsprechende Speicherorte für die sicherungsrelevanten Einstellungsdaten ablegen lassen.

Bevorzugt sind die Speicherorte für jedes Steuergerät in einer Beschreibungsdatei abgelegt. Die Beschreibungsdatei eines Steuergeräts kann an einem definierten Speicherort in einer Speichereinheit des Steuergeräts selbst oder zentral für mehrere Steuergeräte in einer anderen im Kraftfahrzeug angeordneten Speichereinheit abgelegt sein. Alternativ kann die Beschreibungsdatei zumindest eines Steuergeräts offboard, d. h. außerhalb des Fahrzeugs, z. B. in der Diagnose- und Konfigurationseinrichtung vorliegen.

Das Auslesen der zu sichernden Datensätze durch die Diagnose- und Konfigurationseinrichtung kann in unterschiedlicher Art und Weise erfolgen. Beispielsweise kann das Auslesen durch einen Diagnosebefehl, durch einen Funktionsaufruf oder einen direkten Speicherzugriff erfolgen. Bevorzugt ermöglicht ein erfindungsgemäßes Verfahren die Auswahl der jeweiligen Art und Weise des Auslesens durch die Diagnose- und Konfigurationseinrichtung. Diesbezügliche Informationen werden dann bevorzugt in der bereits genannten Beschreibungsdatei hinterlegt und über diese der Diagnose- und Konfigurationseinrichtung zugänglich gemacht.

Die oben erwähnte, zweitgenannte, Aufgabe wird erfindungsgemäß gelöst durch ein Kraftfahrzeug-Steuergerät mit einer Speichereinheit, in welcher eine Beschreibungsdatei gespeichert ist, in welcher der Speicherort zumindest eines sicherungsrelevanten Datensatzes zur Beschreibung benutzer- und/oder fahrzeugindividueller Einstellungen abgelegt ist.

Die Übertragung der Quellspeicherorte sicherungsrelevanter Datensätze von dem Quellsteuergerät an die Diagnose- und Konfigurationseinrichtung erfolgt bevorzugt durch das Auslesen einer solchen Beschreibungsdatei.

Ein erfindungsgemäßes Verfahren und eine in einem erfindungsgemäßem Verfahren verwendete Diagnose- und Konfigurationseinrichtung erweitern die Funktionalitäten der bisher eingesetzten Programmierwerkzeuge um die Möglichkeit zur Sicherung und Wiedereinspielung benutzer- und/oder fahrzeugindividueller Einstellungsdaten beim Austausch oder der Neuprogrammierung eines Steuergeräts. Dabei besteht gegenüber einem Verfahren zum Austausch oder zur Neuprogrammierung eines Steuergeräts gemäß dem Stand der Technik nicht die Notwendigkeit eines zusätzlichen Nutzereingriffs und/oder einer zusätzlichen Bedienaktion.

Die oben erwähnte, drittgenannte, Aufgabe wird erfindungsgemäß gelöst durch eine Diagnose- und Konfigurationseinrichtung, welche über ein Kommunikationssystem mit einem Quellsteuergerät verbindbar ist, welche geeignet ist, von dem Quellsteuergerät den Quellspeicherort zumindest eines sicherungsrelevanten Datensatzes zur Beschreibung benutzer- und/oder fahrzeugindividueller Einstellungen zu empfangen, und welche geeignet ist, zumindest einen Datensatz, dessen Quellspeicherort übertragen wurde, von dem Quellspeicherort auszulesen und zwischenzuspeichern.

Gemäß einer Weiterbildung der vorliegenden Erfindung wird eine erfindungsgemäße Diagnose- und Konfigurationseinrichtung um die Eignung zur Ausgabe von Standardbefehlen zum Auslesen- und/oder Schreiben benutzer- und/oder fahrzeugindividueller Einstellungsdaten aus einem bzw. in ein mit der Diagnose- und Konfigurationseinrichtung verbundenes Steuergerät erweitert.

Gemäß einer weiteren Weiterbildung der vorliegenden Erfindung wird ein erfindungsgemäßes Kraftfahrzeug-Steuergerät um die Eignung zum Empfang und zur Verarbeitung von Standardbefehlen zum Auslesen- und/oder Schreiben der benutzer- und/oder fahrzeugindividuellen Einstellungsdaten erweitert.

Anhand der einzigen beigefügten Zeichnung wird eine bevorzugte Ausführungsform der Erfindung im Folgenden weiter erläutert. Dabei zeigt die einzige beigefügte Zeichnung schematisch ein Blockschaltbild eines Systems zur Durchführung eines erfindungsgemäßen Verfahrens, umfassend eine erfindungsgemäße Diagnose- und Konfigurationseinrichtung und ein Kraftfahrzeug mit erfindungsgemäßen Steuergeräten, welche über ein Kommunikationssystem mit der Diagnose- und Konfigurationseinrichtung verbunden sind.

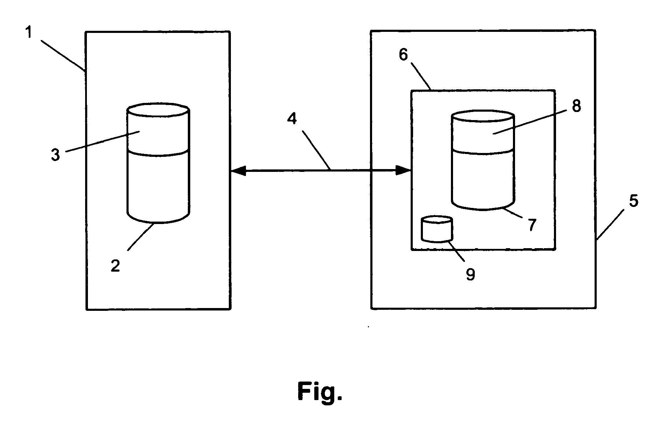

Das in der Zeichnung schematisch dargestellte System zur Durchführung eines erfindungsgemäßen Verfahrens umfasst eine erfindungsgemäße Diagnose- und Konfigurationseinrichtung 1 und ein Kraftfahrzeug 5 mit einem erfindungsgemäßen Steuergerät 6. Das Steuergerät 6 wird in einer Service-Umgebung zumindest zeitweise über ein Kommunikationssystem 4 mit der Diagnose- und Konfigurationseinrichtung 1 verbunden. Typischerweise sind eine Diagnosebuchse des Kraftfahrzeugs und ein mit dieser verbundener Datenbus des Kraftfahrzeugs, an welchen das Steuergerät 6 angeschlossen ist, Teil dieses Kommunikationssystems. Denkbar sind alternativ ebenso eine direkte drahtlose Kommunikation zwischen der Diagnose- und Konfigurationseinrichtung 1 und dem Steuergerät 6 oder eine drahtlose Kommunikation zwischen der Diagnose- und Konfigurationseinrichtung 1 und einem Gateway, welches über einen Datenbus mit dem Steuergerät 6 verbunden ist.

Die Diagnose- und Konfigurationseinrichtung 1 weist eine Speichereinheit 2 auf. Die Speichereinheit 2 umfasst einen Speicherbereich 3 welcher temporär mit über das Kommunikationssystem 4 empfangenen Daten beschreibbar ist. Die im Speicherbereich 3 gespeicherten Daten sind außerdem gesteuert durch die Diagnose- und Konfigurationseinrichtung 1 löschbar und über das Kommunikationssystem 4 ausgebbar.

Die Diagnose- und Konfigurationseinrichtung 1 weist keine Mittel zur Anzeige der im Speicherbereich 3 gespeicherten Daten oder zu deren Weiterleitung an eine andere Recheneinheit oder Anzeigeeinheit außerhalb eines über das Kommunikationssystems 4 verbundenen Kraftfahrzeugs 5 auf.

Das Steuergerät 6 weist eine Speichereinheit 7 auf. Die Speichereinheit 7 umfasst einen Speicherbereich 8, in welchem ein Datensatz gespeichert ist, welcher benutzer- und/oder fahrzeugindividuelle Einstellungen des Steuergeräts beschreibt. Der im Speicherbereich 8 gespeicherte Datensatz ist gesteuert durch die Diagnose- und Konfigurationseinrichtung 1 löschbar, überschreibbar und über das Kommunikationssystem 4 an die Diagnose- und Konfigurationseinrichtung 1 ausgebbar.

Im Folgenden wird regelmäßig nur auf das Steuergerät 6 Bezug genommen. Das Kraftfahrzeug 5 weist jedoch mehrere solcher Steuergeräte auf. Durch die Steuergeräte werden unterschiedliche Fahrzeugfunktionen gesteuert, die jeweils durch in dem jeweiligen Steuergerät abgelegte benutzer- und/oder fahrzeugindividuelle Einstellungsdaten individualisierbar sind.

Die Diagnose- und Konfigurationseinrichtung 1 ist ferner geeignet, Steuergeräte, insbesondere das Steuergerät 6, über das Kommunikationssystem 4 neu zu programmieren (neu zu "flashen"). Bei einer solchen Neuprogrammierung wird der im Speicherbereich 8 gespeicherte Datensatz benutzer- und/oder fahrzeugindividueller Einstellungen überschrieben.

Das Steuergerät 6 weist ferner eine Speichereinheit 9 auf, in welchem eine Beschreibungsdatei für benutzer- und/oder fahrzeugindividuelle Einstellungsdaten des Steuergeräts 6 gespeichert ist. Die Beschreibungsdatei enthält einen Zeiger auf den Speicherbereich 8 in welchem der zuvor genannte Datensatz benutzer- und/oder fahrzeugindividueller Einstellungen gespeichert ist.

Das Kraftfahrzeug 5 wird zur Neuprogrammierung des Steuergeräts 6 in eine Service-Umgebung verbracht und dort über das Kommunikationssystem 4 mit der Diagnose- und Konfigurationseinrichtung 1 verbunden.

Ein Service-Fachmann startet nach dem Herstellen der Verbindung eine Applikation der Diagnose- und Konfigurationseinrichtung 1. Eine Identifikationsnummer oder ein anderer eindeutiger Bezeichner des Steuergeräts 6 wird der Applikation als Argument bei deren Aufruf übergeben. Die Applikation stellt anhand der beim Aufruf übergebenen Argumente fest, welche Steuergeräte, hier nur das Steuergerät 6, des Kraftfahrzeugs neu zu programmieren oder auszutauschen sind.

Alternativ ist es denkbar, dass die Diagnose- und Konfigurationseinrichtung 1 aus im Kraftfahrzeug 5 gespeicherten Informationen, insbesondere Fehlerinformationen, welche über das Kommunikationssystem 4 abgerufen werden, bestimmt, welche Steuergeräte des Kraftfahrzeugs neu zu programmieren oder auszutauschen sind.

Sämtliche in der Folge beschriebenen Schritte der Datensicherung, Neuprogrammierung und Rückspeicherung laufen selbsttätig ohne eine weitere Bedienaktion des Service-Fachmanns ab.

Zu Beginn des Verfahrens identifizieren und/oder authentifizieren sich in an sich bekannter Weise die Diagnose- und Konfigurationseinrichtung 1 und die über das Kommunikationssystem 4 mit der Diagnose- und Konfigurationseinrichtung 1 verbundenen Steuergeräte des Kraftfahrzeugs 5 gegebenenfalls unilateral oder bilateral.

Die Diagnose- und Konfigurationseinrichtung 1 liest zunächst aus allen auszutauschenden oder neu zu programmierenden Steuergeräten, hier nur dem Steuergerät 6, eine Beschreibungsdatei des jeweiligen Steuergeräts aus.

Die Beschreibungsdatei aus der Speichereinheit 9 wird hierzu an die Diagnose- und Konfigurationseinrichtung 1 übertragen. Die Diagnose- und Konfigurationseinrichtung 1 entnimmt dieser Beschreibungsdatei, dass im Speicherbereich 8 ein sicherungsrelevanter Datensatz gespeichert ist.

Die Diagnose- und Konfigurationseinrichtung 1 liest daraufhin den Datensatz aus dem Speicherbereich 8 der Speichereinheit 7 des Steuergeräts 6 aus und speichert diesen Datensatz im Speicherbereich 3 der Speichereinheit 2.

In dem Fall, dass eines der Steuergeräte auszutauschen ist, werden in diesem Steuergerät gespeicherte und in der beschriebenen Art und Weise durch die Diagnose- und Konfigurationseinrichtung 1 gesicherte Datensätze nun auf Anforderung der Diagnose- und Konfigurationseinrichtung 1 gelöscht. Im vorliegenden Ausführungsbeispiel ist dieser Schritt jedoch nicht erforderlich, da das Steuergerät 6 lediglich neu programmiert wird.

Im vorliegenden Ausführungsbeispiel bleibt die Diagnose- und Konfigurationseinrichtung 1 während des gesamten beschriebenen Ablaufs über das Kommunikationssystem mit sämtlichen neu zu programmierenden Steuergeräten des Kraftfahrzeugs 5, hier nur dem Steuergerät 6, verbunden. Eine erneute gegenseitige Identifikation oder Authentifikation ist deshalb nicht erforderlich.

Im Falle einer zwischenzeitlichen Unterbrechung dieser Verbindung oder im Falle eines Austauschs von Steuergeräten kann eine unilaterale oder bilaterale Identifikation und/oder Authentifikation zwischen der Diagnose- und Konfigurationseinrichtung 1 und den Steuergeräten des Kraftfahrzeugs 5 vorgesehen werden, um sicherzustellen, dass zuvor gesicherte Datensätze in das hierfür vorgesehene Steuergerät geschrieben bzw. rückgespeichert werden.

Nach der Speicherung des Datensatzes im Speicherbereich 3 beginnt selbsttätig die Neuprogrammierung des Steuergeräts 6. Dieser Verfahrensschritt läuft in an sich bekannter Weise ab, weshalb hierauf nicht im Detail eingegangen wird. Bei der Neuprogrammierung wird der im Speicherbereich 8 gespeicherte Datensatz benutzer- und/oder fahrzeugindividueller Einstellungen überschrieben.

Nach dem Abschluss der Neuprogrammierung beginnt selbsttätig die Rückübertragung und Rückspeicherung des gesicherten Datensatzes. Hierzu wird der zuvor im Speicherbereich 3 gespeicherte Datensatz aus der Speichereinheit 2 gelesen, über das Kommunikationssystem 4 an das Steuergerät 6 übertragen und dort in den Speicherbereich 8 der Speichereinheit 7 geschrieben.

Das Steuergerät 6 besitzt nun dieselbe benutzer- und/oder fahrzeugindividuelle Konfiguration wie vor dem Start des Verfahrens.

Nach der erfolgreich abgeschlossenen Rückspeicherung, im vorliegenden Beispiel der Rückspeicherung des einzigen gesicherten Datensatzes in den Speicherbereich 8, werden sämtliche in der Diagnose- und Konfigurationseinrichtung 1 zwischengespeicherten Datensätze aus der Diagnose- und Konfigurationseinrichtung 1 gelöscht.

Im Rahmen der durch eine einzige Bedienaktion gestarteten Applikation der Diagnose- und Konfigurationseinrichtung 1 wurde durch die oben beschriebenen Abläufe und Vorgänge das Steuergerät 6 neu programmiert, wobei benutzer- und/oder fahrzeugindividuelle Einstellungsdaten von der ursprünglichen in eine neue Software-Version übernommen wurden.

Im vorliegenden Ausführungsbeispiel ist zu Gunsten einer klaren und verständlichen Darstellung die Sicherung nur eines einzigen Datensatzes aus nur einem einzigen Steuergerät beschrieben. Der erfinderische Gedanke schließt jedoch die Sicherung mehrerer Datensätze aus mehreren Steuergeräten ein.

## Patentansprüche

1. Verfahren zum Sichern benutzer- und/oder fahrzeugindividueller Einstellungsdaten eines Kraftfahrzeugs, welche in einem auszutauschenden oder neu zu programmierenden Quellsteuergerät gespeichert sind, bei welchem das Quellsteuergerät über ein Kommunikationssystem mit einer Diagnose- und Konfigurationseinrichtung verbunden wird,
**dadurch gekennzeichnet, dass**
von dem Quellsteuergerät an die Diagnose- und Konfigurationseinrichtung der Quellspeicherort zumindest eines sicherungsrelevanten Datensatzes zur Beschreibung benutzer- und/oder fahrzeugindividueller Einstellungen sowie weitere Angaben betreffend den am jeweiligen Speicherort befindlichen Datensatz übertragen werden,
dass von der Diagnose- und Konfigurationseinrichtung anhand der weiteren Angaben eine Auswahl zu sichernder Datensätze getroffen wird und
dass die zu sichernden Datensätze durch die Diagnose- und Konfigurationseinrichtung von den jeweiligen Quellspeicherorten ausgelesen und in der Diagnose- und Konfigurationseinrichtung zwischengespeichert werden.

2. Verfahren nach Anspruch 1, **dadurch gekennzeichnet,**
**dass** ein in der Diagnose- und Konfigurationseinrichtung zwischengespeicherter Datensatz nach einem Austausch oder einer Neuprogrammierung des Quellsteuergeräts von der Diagnose- und Konfigurationseinrichtung an ein Zielsteuergerät übertragen und an einem Zielspeicherort in dem Zielsteuergerät gespeichert wird.

3. Verfahren nach Anspruch 2, **dadurch gekennzeichnet,**
**dass** der Zielspeicherort in dem Zielsteuergerät dem Quellspeicherort in dem Quellsteuergerät hinsichtlich der Verwertung eines dort gespeicherten Datensatzes im jeweiligen Steuergerät entspricht.

4. Verfahren nach einem der Ansprüche 2 oder 3, **dadurch gekennzeichnet,**
**dass** im Fall einer Neuprogrammierung des Quellsteuergeräts das Quellsteuergerät nach der Neuprogrammierung als Zielsteuergerät dient und der Zielspeicherort gleich dem Quellspeicherort ist.

5. Verfahren nach einem der Ansprüche 2 oder 3, **dadurch gekennzeichnet,**
**dass** im Fall eines Austauschs des Quellsteuergeräts gegen ein Zielsteuergerät nach dem Austausch das Zielsteuergerät über das Kommunikationssystem anstelle des Quellsteuergeräts mit der Diagnose- und Konfigurationseinrichtung verbunden wird.

6. Verfahren nach einem der Ansprüche 2, 3 oder 5, **dadurch gekennzeichnet, dass** im Fall eines Austauschs des Quellsteuergeräts gegen ein Zielsteuergerät zumindest ein sicherungsrelevanter Datensatz nach erfolgreich abgeschlossener Zwischenspeicherung in der Diagnose- und Konfigurationseinrichtung aus dem Quellsteuergerät gelöscht oder durch einen Standard-Datensatz überschrieben wird.

7. Verfahren nach einem der Ansprüche 1 bis 6, **dadurch gekennzeichnet,**
**dass** sämtliche zwischengespeicherten Datensätze nach erfolgreich abgeschlossener Speicherung im Zielsteuergerät aus der Diagnose- und Konfigurationseinrichtung gelöscht werden.

## Claims

1. A method for backing up user-specific and/or vehicle-specific configuration data of a motor vehicle which is stored in a source controller to be replaced or re-programmed, in which method the source controller is connected to a diagnostic and configuration apparatus via a communication system, **characterised in that** the source memory location of at least one backup-relevant data record for describing user-specific and/or vehicle-specific settings and further information concerning the data record located in the respective memory location are transferred from the source controller to the diagnostic and configuration apparatus, **in that** the diagnostic and configuration apparatus makes a selection of data records to be backed up on the basis of the further information and **in that** the data records to be backed up are read out by the diagnostic and configuration apparatus from the respective source memory locations and are stored temporarily in the diagnostic and configuration apparatus.

2. A method according to claim 1, **characterised in that** a data record temporarily stored in the diagnostic and configuration apparatus is transferred from the diagnostic and configuration apparatus to a target controller after the source controller has been replaced or re-programmed and is stored in a target memory location in the target controller.

3. A method according to claim 2, **characterised in that** the target memory location in the target controller corresponds to the source memory location in the source controller in respect of the utilisation of a data record stored there in the respective controller.

4. A method according to either claim 2 or claim 3, **characterised in that** in the case of a re-programming of the source controller, the source controller serves as the target controller after re-programming and the target memory location is the same as the source memory location.

5. A method according to either claim 2 or claim 3, **characterised in that** in the case of a replacement of the source controller with a target controller, after the replacement, the target controller is connected to the diagnostic and configuration apparatus via the communication system instead of the source controller.

6. A method according to any one of claims 2, 3 or 5, **characterised in that** in the case of a replacement of the source controller with a target controller, at least one backup-relevant data record is deleted from the source controller after having been successfully temporarily stored in the diagnostic and configuration apparatus or is overwritten by a standard data record.

7. A method according to any one of claims 1 to 6, **characterised in that** after having been successfully stored in the target controller, all the temporarily stored data records are deleted from the diagnostic and configuration apparatus.

## Revendications

1. Procédé de sécurisation de données de réglage d'un véhicule particuliers à l'utilisateur et/ou au véhicule, qui sont stockées dans un appareil de commande source à remplacer et à reprogrammer, et selon lequel l'appareil de commande source est relié à un dispositif de diagnostic et de configuration par un système de communication,
**caractérisé en ce que**
l'appareil de commande source transmet au dispositif de diagnostic et de configuration l'endroit de stockage source d'au moins un jeu de données important pour la sécurité pour décrire des réglages particuliers à un utilisateur et/ou au véhicule ainsi que d'autres indications concernant le jeu de données situé à l'endroit de stockage respectif,
le dispositif de diagnostic et de configuration choisit à l'aide des autres indications des jeux de données à sécuriser, et
les jeux de données à sécuriser sont extraits, par le dispositif de diagnostic et de configuration, des endroits de stockage sources respectifs et entreposés dans le dispositif de diagnostic et de configuration.

2. Procédé selon la revendication 1,
**caractérisé en ce qu'**
après un remplacement ou une reprogrammation de l'appareil de commande source, un jeu de données entreposé dans le dispositif de diagnostic et de configuration est transmis par le dispositif de diagnostic et de configuration à un appareil de commande cible et stocké à un endroit de stockage cible dans l'appareil de commande cible.

3. Procédé selon la revendication 2,
**caractérisé en ce que**
l'endroit de stockage cible dans l'appareil de commande cible correspond à l'endroit de stockage source dans l'appareil de commande, source en vue de l'exploitation d'un jeu de données stocké dans l'appareil de commande respectif.

4. Procédé selon l'une des revendications 2 ou 3,
**caractérisé en ce qu'**
après une reprogrammation de l'appareil de commande source, celui-ci sert d'appareil de commande cible et l'endroit de stockage cible correspond à l'endroit de stockage source.

5. Procédé selon l'une des revendications 2 ou 3,
**caractérisé en ce qu'**
dans le cas d'un remplacement de l'appareil de commande source par un appareil de commande cible celui-ci est relié, après le remplacement et de préférence par le système de communication, au dispositif de diagnostic et de configuration au lieu de l'être à l'appareil de commande source.

6. Procédé selon l'une des revendications 2, 3 ou 5,
**caractérisé en ce qu'**
en cas d'un remplacement de l'appareil de commande source par un appareil de commande cible, au moins un jeu de données important pour la sécurité est effacé de l'appareil de commande source ou écrasé par un jeu de données standard, après l'entreposage réussi dans le dispositif de diagnostic et de configuration.

7. Procédé selon l'une des revendications 1 à 6,
**caractérisé en ce que**
tous les jeux de données entreposés sont effacés du dispositif de diagnostic et de configuration, après la mémorisation réussie dans l'appareil de commande cible.
